# EUROPÄISCHE PATENTSCHRIFT

(11) **EP 2 099 643 B1**
(45) Veröffentlichungstag und Bekanntmachung des Hinweises auf die Patenterteilung: **16.10.2013**
(21) Anmeldenummer: 07802022.9
(22) Anmeldetag: 31.08.2007
(51) Int. Cl.: B60N 2/46, F16B 17/00

(54) **MEHRTEILIGES FAHRZEUGAUSSTATTUNGSTEIL UND VERBINDUNGSVERFAHREN**
MULTI-PART EQUIPMENT PIECE FOR A VEHICLE AND CONNECTING METHOD
PIÈCE D'ÉQUIPEMENT POUR VÉHICULE EN PLUSIEURS PARTIES, ET PROCÉDÉ D'ASSEMBLAGE

(30) Priorität: 02.10.2006 DE 102006047082; 12.12.2006 DE 102006058491
(43) Veröffentlichungstag der Anmeldung: 16.09.2009
(73) Patentinhaber: Johnson Controls Interiors GmbH & Co. KG, 47929 Grefrath (DE)
(72) Erfinder: KALUS, Holger, 47228 Duisburg (DE); KASCHERUS, Günter, 41334 Nettetal (DE)
(74) Vertreter: Finger, Catrin
(86) Internationale Anmeldenummer: PCT/EP2007/007604
(87) Internationale Veröffentlichungsnummer: WO 2008/040421

(56) Entgegenhaltungen:
- EP-A- 1 256 484
- DE-A1- 19 900 310
- DE-U1- 20 303 303
- DE-U1- 29 714 749
- RICHTER ET AL: "Bauelemente der Feinmechanik" BAUELEMENTE DER FEINMECHANIK, 1959, Seiten 151-156, XP002198593

## Beschreibung

Die Erfindung betrifft ein Ausstattungsteil mit einem ersten und einem zweiten Bauteil für den Innenraum eines Fahrzeugs, bei welchem mindestens ein Vorsprung des ersten Bauteils in eine Ausnehmung des zweiten Bauteils einsetzbar und dort durch Umformung des Überstands festlegbar ist, sowie ein Verfahren zu seiner Herstellung.

### Stand der Technik

Ein Ausstattungsteil in Form einer Türverkleidung und ein entsprechendes Verfahren sind aus der Druckschrift EP 1 256 484 A1 bekannt. Dort wird ein erstes Bauteil in Form einer Armauflage mit einem als Träger ausgebildeten zweiten Bauteil dadurch verbunden, dass ein nietartiger Vorsprung an der Armauflage durch eine Ausnehmung im Träger hindurch gesteckt wird. Anschließend wird der aus dem Träger herausragende Überstand des Vorsprungs aufgeweitet, so dass beide Bauteile unlösbar miteinander zu einer im Crashfall ungünstigen, weil relativ harten Struktur verbunden sind. Bei einem hohen Anteil nichtschmelzender Fasern im nietartigen Vorsprung ist dieses Vorgehen ferner nicht mehr möglich oder führt nur zu einer unbefriedigenden Festigkeit der Verbindung.

Ebenso können derartige Vorsprünge in der Regel nur durch Spritzgießen der Armauflage erzeugt werden, nicht jedoch durch Verpressen flächiger Halbzeuge.

Aus der DE 10 2007 042 169 A1 und der gattungsgemäßen EP 1 180 410 A2 sind Verbindungen von zwei Blechteilen bekannt, bei welchen die Teile kraft- und formschlüssig miteinander verbunden und zusätzlich in einer Schweißverbindung verbunden sind.

### Aufgabe

Der Erfindung liegt die Aufgabe zugrunde, das gattungsgemäße Ausstattungsteil hinsichtlich Fertigung und Crashverhalten zu verbessern.

### Lösung

Die Aufgabe wird bei einem gattungsgemäßen Ausstattungsteil durch die Merkmale des Anspruchs 1 gelöst. Dabei ist der Vorsprung als Lasche mit einer gegenüber ihrer Längsausdehnung geringeren Wanddicke ausgebildet, welche nach dem Einsetzen in die als Langloch ausgebildete Ausnehmung durch Biegen um eine Längsachse der Lasche kraftschlüssig in dem zweiten Bauteil verankert wird. Hierdurch werden harte Materialverdickungen im Verbindungsbereich vermieden. Außerdem ist dieses Umbiegen auch bei vielen Werkstoffen möglich, die sich einem Aufspreizen im Sinne einer vorbekannten Nietverbindung widersetzen. Die Verbindung erfolgt dabei im Wesentlichen unlösbar. Ein Trennen der Bauteile ist somit nur unter Beschädigung oder Zerstörung mindestens eines Bauteils möglich.

Dabei ist vorgesehen, dass die Lasche zumindest partiell in Anlage an die Oberfläche des zweiten Bauteils gebracht wird. Die Verbindung erfolgt ferner mit Vorteil nicht nur an einem Ort, sondern durch eine Anzahl von linienförmig angeordneten Laschen, welche in eine entsprechende Anzahl von linienförmig angeordneten Langlöchern bringbar sind.

Die Wanddicke der Lasche entspricht bevorzugt im Wesentlichen der Wanddicke der angrenzenden Bereiche des ersten Bauteils, so dass die Laschen auf einfache Weise durch Stanzen und/oder Laserbeschnitt des Randbereichs des ersten Bauteils herstellbar sind. Die Verbindung der Lasche mit dem zweiten Bauteil erfolgt zusätzlich stoffschlüssig durch Erwärmen und Plastifizieren von thermoplastischen Anteilen der nachfolgend in Oberflächenkontakt gebrachten Bereiche des ersten und zweiten Bauteils.

### Figuren

Die Figuren stellen beispielhaft und schematisch eine Ausführung der Erfindung dar.

Es zeigen:
- Fig. 1: eine perspektivische Ansicht des ersten und zweiten Bauteils vor dem Fügen,
- Fig. 2: einen Schnitt durch das erste und zweite Bauteil vor, während und nach dem Fügen.

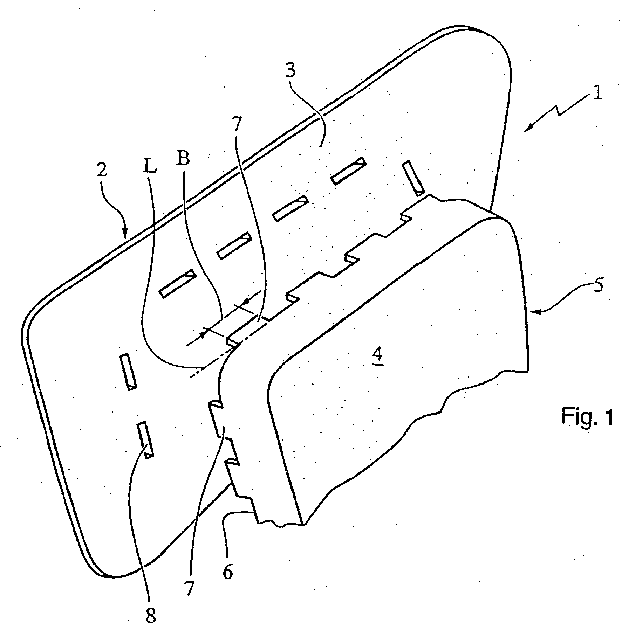

In Fig. 1 ist ausschnittsweise ein Fahrzeugausstattungsteil 1 mit einem ersten Bauteil 5 in Form eines Segments 3 einer Türinnenverkleidung und einem als Armauflage 4 ausgebildeten zweiten Bauteil 2 dargestellt. Die wannenartig gestaltete, zumindest anteilig aus einem Polypropylen/ Naturfasergemisch bestehende Armauflage 4 ist an ihrer in Richtung des Segments 3 weisenden Kante 6 mit einer Anzahl von auskragenden Laschen 7 ausgestattet, während das Segment 3 eine gleiche Anzahl kongruent ausgebildeter Langlöcher 8 aufweist. Die Laschen 7 werden vorzugsweise durch Stanzen in das noch flächige oder bereits dreidimensional verformte Halbzeug der Armauflage 4 eingebracht. Zu diesem Zeitpunkt kann die Armauflage 4 gegebenenfalls bereits mit einer Dekorschicht und/oder einer Polsterung versehen sein. Es versteht sich, dass die Länge der Laschen 7 größer sein muss als die Dicke des flächigen Segments 3 im Bereich der Langlöcher 8, insbesondere um das etwa 3 bis 10fache. Die Langlöcher 8 werden gleichfalls mit Vorteil aus dem Segment 3 ausgestanzt.

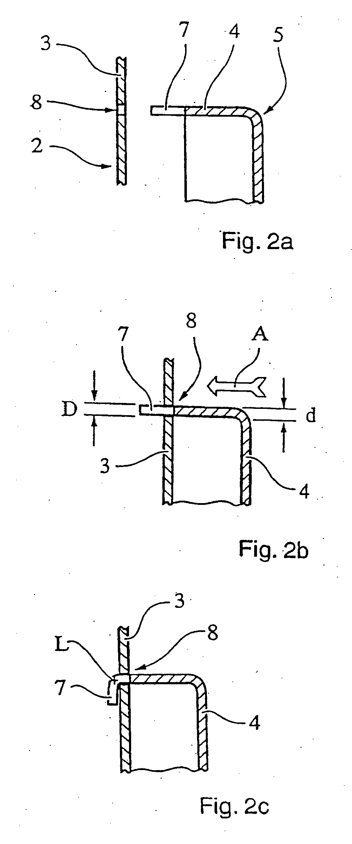

Die so vorbereiteten Bauteile 2, 5 (siehe Schnitt nach Fig. 2a) werden nachfolgend durch Einstecken der Laschen 7 in die Langlöcher 8 (Pfeil A in Fig. 2b) und anschließendes Umbiegen der überstehenden Laschen 7 um deren Längsachsen L aus einer orthogonalen in eine etwa parallel zum Segment 3 verlaufenden Stellung (Fig. 2c) gefügt. Die Laschen 7 werden nach dem Einstecken, jedoch vor dem Umbiegen, durch Warmluft erwärmt und durch Erweichung ihrer thermoplastischen Anteile leichter umformbar. Ein Anschmelzen der thermoplastischen Anteile der Armauflage 4 und mit diesen verträglichen Anteilen des Segments 3 führt zusätzlich zu einem Stoffschluss zwischen den Bauteilen 2, 5. Mit Vorteil besteht das Segment 3 ebenfalls aus einem Polypropylen/ Naturfasergemisch.

Der auf diese Weise erzeugte Verbindungsbereich weist eine nur sehr geringe Materialanhäufung auf, was einerseits den Werkstoffeinsatz verringert und andererseits eine im Crashfall (beispielsweise bei einem Seitenaufprall) ungewollte lokale Verhärtung des Fahrzeugausstattungsteils 1 vermeidet. Im Ausführungsbeispiel können ferner sowohl das Einstecken der Laschen 7 als auch unter Verwendung entsprechender Stempel deren Verformung durch Bewegungen in Y-Richtung erfolgen.

### Bezugszeichenliste

- 1: Fahrzeugausstattungsteil
- 2: zweites Bauteil
- 3: Segment (einer Türinnenverkleidung)
- 4: Armauflage
- 5: erstes Bauteil
- 6: Kante
- 7: Lasche
- 8: Langloch

- A: Pfeil (Fügerichtung)
- B: Längsausdehnung (der Lasche 7)
- D: Wanddicke (der Lasche 7)
- d: Wanddicke (des ersten Bauteils)
- L: Längsachse (der Lasche 7)

## Patentansprüche

1. Ausstattungsteil mit einem ersten und einem zweiten Bauteil für den Innenraum eines Fahrzeugs, bei welchem mindestens ein Vorsprung des ersten Bauteils (5) in eine Ausnehmung des zweiten Bauteils (2) einsetzbar und dort durch Umformung des Überstands festlegbar ist, wobei der Vorsprung als Lasche (7) mit einer gegenüber ihrer Längsausdehnung (B) geringeren Wanddicke (D) ausgebildet ist, welche nach dem Einsetzen in die als Langloch (8) ausgebildete Ausnehmung durch Biegen um eine Längsachse (L) der Lasche form- und kraftschlüssig in dem zweiten Bauteil verankert ist, wobei die Lasche (7) zumindest partiell in Anlage an die Oberfläche des zweiten Bauteils (2) gebracht ist, **dadurch gekennzeichnet, dass** die Verbindung der Lasche (7) mit dem zweiten Bauteil (2) zusätzlich stoffschlüssig durch Erwärmen und Plastifizieren von thermoplastischen Anteilen der in Oberflächenkontakt gebrachten Bereiche des ersten Bauteils (5) und des zweiten Bauteils (2) erfolgt ist.

2. Ausstattungsteil nach Anspruch 1, **dadurch gekennzeichnet, dass** eine Anzahl von linienförmig angeordneten Laschen (7) in eine entsprechende Anzahl von linienförmig angeordneten Langlöchern (8) bringbar ist.

3. Ausstattungsteil nach Anspruch 1 oder 2, **dadurch gekennzeichnet, dass** die Wanddicke (D) der Lasche (7) der Wanddicke (d) der angrenzenden Bereiche des ersten Bauteils (5) entspricht.

4. Ausstattungsteil nach einem der vorhergehenden Ansprüche in Form einer Fahrzeugtür, wobei das erste Bauteil (5) die Armauflage (4) und das zweite Bauteil (2) der Träger (Segment 3) der Fahrzeugtür ist.

5. Verfahren zur Herstellung eines Ausstattungsteils nach Anspruch 1, wobei die Lasche (7) des ersten Bauteils (2) in das Langloch des zweiten Bauteils (5) eingesetzt und nachfolgend um eine Längsachse (L) der Lasche gebogen wird, wobei die Lasche (7) beim Umbiegen zumindest partiell in Anlage an die Oberfläche des zweiten Bauteils (2) gebracht und form- und kraftschlüssig in dem zweiten Bauteil verankert wird, **dadurch gekennzeichnet, dass** die Lasche (7) vor dem Umbiegen erwärmt und nachfolgend stoffschlüssig durch Erwärmen und Plastifizieren der in Oberflächenkontakt gebrachten Bereiche des ersten Bauteils (5) und des zweiten Bauteils (2) mit dem zweiten Bauteil (2) verbunden wird.

6. Verfahren nach Anspruch 5, **dadurch gekennzeichnet, dass** Lasche (7) und/oder Langloch (8) durch Stanzen und/oder Laserbeschnitt des ersten oder zweiten Bauteils (2, 5) gefertigt werden.

## Claims

1. Equipment piece with a first and a second component for the interior of a vehicle, in which at least one protrusion of the first component (5) may be inserted into a recess of the second component (2), and may be secured there by deformation of the projecting portion, the protrusion being configured as a tab (7) having a wall thickness (D) which is smaller than its longitudinal extension (B), which is anchored positively and non-positively in the second component after inserting into the recess configured as a slot (8) by bending about a longitudinal axis (L) of the tab, the tab (7) being brought to bear at least partially against the surface of the second component (2), **characterized in that** the connection of the tab (7) to the second component (2) additionally takes place by a material connection by heating and melting thermoplastic portions of the regions of the first component (5) and of the second component (2) brought into surface contact.

2. Equipment piece according to Claim 1, **characterized in that** a number of tabs (7) arranged in a linear manner may be displaced into a corresponding number of slots (8) arranged in a linear manner.

3. Equipment piece according to Claim 1 or 2, **characterized in that** the wall thickness (D) of the tab (7) corresponds to the wall thickness (d) of the adjacent regions of the first component (5).

4. Equipment piece according to one of the preceding claims in the form of a vehicle door, the first component (5) being the armrest (4) and the second component (2) being the support (segment 3) of the vehicle door.

5. Method for producing an equipment part according to Claim 1, the tab (7) of the first component (2) being inserted into the slot of the second component (5) and subsequently being bent about a longitudinal axis (L) of the tab, the tab (7) being brought to bear at least partially against the surface of the second component (2) and anchored positively and non-positively in the second component when bent back, **characterized in that** the tab (7) is heated before bending back and is subsequently connected by a material connection to the second component (2) by heating and melting the regions of the first component (5) and of the second component (2) brought into surface contact.

6. Method according to Claim 5, **characterized in that** the tab (7) and/or slot (8) are made by punching out and/or laser cutting the first or second component (2, 5).

## Revendications

1. Pièce d'équipement dotée d'un premier et d'un deuxième composant prévu pour l'habitacle d'un véhicule, dans laquelle au moins une saillie du premier composant (5) peut être insérée dans un évidement du deuxième composant (2) et peut être fixée à cet endroit par déformation de la partie saillante, la saillie prenant la forme d'une bride (7) présentant une épaisseur de paroi (D) plus réduite que son extension longitudinale (B) et ancrée par complémentarité de formes et de forces dans le deuxième composant après insertion dans l'évidement en forme de trou oblong (8) par flexion autour d'un axe longitudinal (L) de la bride, la bride (7) étant amenée au moins en partie dans l'installation au niveau de la surface du deuxième composant (2), **caractérisée en ce que** l'assemblage de la bride (7) avec le deuxième composant (2) se produit en outre par complémentarité de matières par chauffage et plastification de particules thermoplastiques des zones du premier composant (5) et du deuxième composant (2) amenées en contact superficiel.

2. Pièce d'équipement selon la revendication 1, **caractérisée en ce qu'**un certain nombre de brides (7) disposées en forme de lignes peut être amené dans un nombre correspondant de trous oblongs (8) disposés en forme de lignes.

3. Pièce d'équipement selon la revendication 1 ou 2, **caractérisée en ce que** l'épaisseur de paroi (D) de la bride (7) correspond à l'épaisseur de paroi (d) des zones connexes du premier composant (5).

4. Pièce d'équipement selon l'une quelconque des revendications précédentes en forme de porte de véhicule, le premier composant (5) étant l'accoudoir (4) et le deuxième composant (2) étant le support (segment 3) de la porte de véhicule.

5. Procédé de fabrication de pièce d'équipement selon la revendication 1, la bride (7) du premier composant (2) étant insérée dans le trou oblong du deuxième composant (5) avant d'être incurvée autour d'un axe longitudinal (L) de la bride, la bride (7) étant amenée dans l'installation au niveau de la surface du deuxième composant (2) par flexion au moins partielle et étant ancrée dans le deuxième composant par complémentarité de formes et de forces, **caractérisé en ce que** la bride (7) est chauffée avant la flexion puis reliée au deuxième composant (2) par complémentarité de matières, par chauffage et plastification des zones du premier composant (5) et du deuxième composant (2) amené en contact superficiel.

6. Procédé selon la revendication 5, **caractérisé en ce que** la bride (7) et/ou le trou oblong (8) sont fabriqués par estampage et/ou découpage par laser du premier ou deuxième composant (2, 5).
